Europäisches Patentamt

(19) European Patent Office

Office européen des brevets

(11) Numéro de publication: **0 233 420**
**B1**

# (12) FASCICULE DE BREVET EUROPEEN

(45) Date de publication du fascicule du brevet:
31.01.90

(21) Numéro de dépôt: **86402695.0**

(22) Date de dépôt: **05.12.86**

(51) Int. Cl.⁴: **H02B 1/26**

(54) **Dispositif de prise de courant sectionnable sur une colonne de distribution à barres omnibus.**

(30) Priorité: **22.01.86 FR 8600842**

(43) Date de publication de la demande:
**26.08.87 Bulletin 87/35**

(45) Mention de la délivrance du brevet:
**31.01.90 Bulletin 90/5**

(84) Etats contractants désignés:
**AT BE CH DE ES GB IT LI NL**

(56) Documents cités:
**CH-A- 516 238**
**FR-A- 2 575 340**
**GB-A- 807 266**

(73) Titulaire: **TELEMECANIQUE, 43-45, Boulevard Franklin Roosevelt, F-92504 Ruell-Malmaison Cedex(FR)**

(72) Inventeur: **Jego, Gérard, 12, rue Louis-Pasteur, F-21470 Brazey en Plaine(FR)**
Inventeur: **Lacan, Guy, 19, rue des Champs Fleuris, Mesnil Le Roi F-78600 Maisons Lafitte(FR)**
Inventeur: **Thierry, Jean-Pierre, 36, rue des Espaces Verts, F-21560 Couternon(FR)**
Inventeur: **Verdenne, Serge, 7, rue du Potet, F-21120 Marcilly sur Tille(FR)**

(74) Mandataire: **Marquer, Francis et al, 35, Avenue Victor Hugo, F-78960 Voisins le Bretonneux(FR)**

## Description

La présente invention concerne un dispositif de prise de courant sectionnable sur une colonne de distribution à barres omnibus parallèles non coplanaires, pour des appareils électriques interrupteurs.

Par appareils électriques interrupteurs, on désigne présentement des appareils tels que des contacteurs, disjoncteurs, contacteurs-disjoncteurs, appareils de protection, ou interrupteurs proprement dits comprenant plusieurs pôles pour effectuer l'ouverture et/ou la fermeture d'un circuit de puissance alimenté à partir des barres omnibus de distribution précitées.

On connaît, du document FR-A 2 575 340, un dispositif de prise de courant et de sectionnement associé à une colonne de distribution comprenant des barres omnibus verticales non coplanaires et axées dans différents plans parallèles verticaux. Ce dispositif se présente sous forme d'un bloc moulé en matière isolante et porte, d'une part, des moyens fixes de connexion électrique à des bornes de puissance de l'appareil interrupteur utilisé et, d'autre part, des pinces de prise de courant embrochables sur les barres omnibus verticales et débrochables de celles-ci par translation d'un coulisseau porte-pinces commandé par un arbre rotatif, lequel est entraîné en rotation par une noix qui est montée à translation sur l'arbre en étant sollicitée par un ressort de rappel et qui est assujettie à un organe de commande manuelle.

Selon la demande précitée, le bloc de prise de courant (embrochement) et de sectionnement porte également un micro-contact de précoupure qui est sensible au déplacement de la noix selon l'axe de l'arbre lors de l'actionnement de l'organe de commande manuelle, et qui provoque le déclenchement de l'appareil interrupteur lors du déplacement de la noix, de façon à assurer que le sectionnement s'effectuera à vide.

La présente invention a en particulier pour but de perfectionner ce type de dispositif de prise de courant sectionnable, en réalisant en coopération appropriée avec les moyens de commande du sectionnement précités, un mécanisme simple de sécurité qui commande la précoupure avant le mouvement de sectionnement.

Elle vise également à réaliser un dispositif pour lequel les moyens de commande du sectionnement sont particulièrement bien adaptés pour permettre à l'opérateur de sectionner et de réarmer en toute sécurité la liaison électrique entre les barres omnibus de distribution et l'appareil interrupteur.

L'invention concerne un dispositif de prise de courant sectionnable conforme au préambule de la revendication 1, caractérisé en ce que des moyens de commande de la précoupure comportent une pièce de transmission mobile en translation en étant sollicitée par un autre ressort de rappel et présentant une rampe d'attaque d'un organe actionnant le microcontact, la pièce de transmission occupant, en position d'embrochement, une première position de repos dans laquelle l'appareil interrupteur est enclenché. et en ce que la pièce de transmission comprend également un ergot en forme de crochet venant s'engager, pour la position d'embrochement, dans une gorge annulaire creusée sur le pourtour externe de la noix à l'une de ses extrémités pour permettre, dans cette position d'embrochement, le déplacement en translation à la fois de la noix selon l'axe de l'arbre sous l'action d'un effort de pression exercé sur celle-ci par l'organe de commande manuelle, et de la pièce de transmission à partir de sa position de repos dont la rampe vient solliciter, au cours de ce déplacement, l'organe actionnant le microcontact de manière à provoquer le déclenchement de l'appareil interrupteur, la commande du sectionnement par rotation de l'arbre s'opérant en fin de déplacement de l'ensemble noix - pièce de transmission et en maintenant l'effort de pression, l'ergot étant en appui glissant dans la gorge de la noix lors de la commande du sectionnement.

Selon une autre caractéristique de l'invention, des moyens souples escamotables, constitués par exemple par un ressort à lame, sont prévus pour retenir, uniquement dans la position de sectionnement, la pièce de transmission préalablement déplacée de façon à autoriser, par l'intermédiaire d'une rampe de dégagement formée en bordure de la gorge de la noix et venant en regard de l'ergot de la pièce de transmission dans la position de sectionnement, le déplacement en sens inverse de la noix seule sous l'action de son ressort après relâchement de l'effort de pression.

Suivant encore un aspect de l'invention, la noix d'entraînement de l'arbre rotatif est dotée en surface d'une encoche dans laquelle vient s'engager par translation, uniquement en position de sectionnement, un volet coulissant actionné manuellement, ledit volet une fois engagé dans l'encoche de la noix laissant découverte une fenêtre pour permettre, dans cette position de sectionnement, un verrouillage du type "3 cadenas" du dispositif ; de plus, le volet est susceptible d'être bloqué en position d'embrochement pour laquelle il obture complètement la fenêtre précitée.

De préférence, l'organe de commande du sectionnement est constitué par une clé dotée d'un ergot et présentant une empreinte asymétrique destinée à être reçue dans un logement conjugué de la noix uniquement dans les deux positions respectives d'embrochement et de sectionnement, par l'intermédiaire de deux encoches repérées de passage de l'ergot qui sont ménagées dans une pièce formant une collerette d'introduction coaxiale à la noix et qui coïncident avec le logement de la noix seulement dans les deux positions respectives d'embrochement et de sectionnement.

Il peut en outre être prévu des moyens de visualisation de la coupure effective, constitués simplement par une fenêtre dans laquelle apparaît l'extrémité des pinces en position de sectionnement.

D'autres avantages de l'invention apparaîtront mieux dans la description détaillée qui suit et se réfère aux dessins annexés donnés uniquement à titre d'exemple et dans lesquels:

La figure 1 représente en élévation de face un système de distribution électrique pour appareils interrupteurs ;

La figure 2 représente une vue de dessus partielle en coupe de la colonne de distribution associée au dispositif de prise de courant sectionnable conforme à l'invention, ce dernier étant illustré en position d'embrochement sur la colonne ;

La figure 3 représente une vue de dessus schématique du dispositif de prise de courant sectionnable conforme à l'invention ;

La figure 4 représente une vue partielle en coupe d'une liaison à pignon et crémaillère entre l'arbre rotatif de commande du sectionnement et le coulisseau portant les pinces de connexion électrique ;

La figure 5 représente une vue partielle en coupe selon la ligne V-V de la figure 3 ;

La figure 6 représente une vue selon la flèche VI de la figure 3, le dispositif conforme à l'invention étant illustré en position de sectionnement et après cadenassage ;

Les figures 7, 9, 11 et 13 représentent une vue partielle en coupe selon la ligne V-V de la figure 3, respectivement pour diverses positions prises par le dispositif conforme à l'invention au cours de la commande du sectionnement ;

Les figures 8, 10, 12 et 14 représentent un schéma simplifié sous forme de contacts électriques dont les états respectifs illustrés correspondent respectivement aux diverses positions du dispositif des figures précédentes ;

La figure 15 est une vue similaire à la figure 13, avec cadenassage du dispositif en position de sectionnement ;

La figure 16 est une vue similaire à la figure 14, pour la position sectionnée et cadenassée du dispositif de la figure 15 ;

Les figures 17, 19 et 21 représentent une vue partielle en coupe selon la ligne V-V de la figure 3, respectivement pour les différentes étapes d'un contrôle à vide de l'appareil interrupteur élaborées en position de sectionnement ; et

Les figures 18, 20 et 22 représentent un schéma simplifié sous forme de contacts électriques dont les états respectifs illustrés correspondent respectivement aux différentes étapes du contrôle à vide selon les figures précédentes.

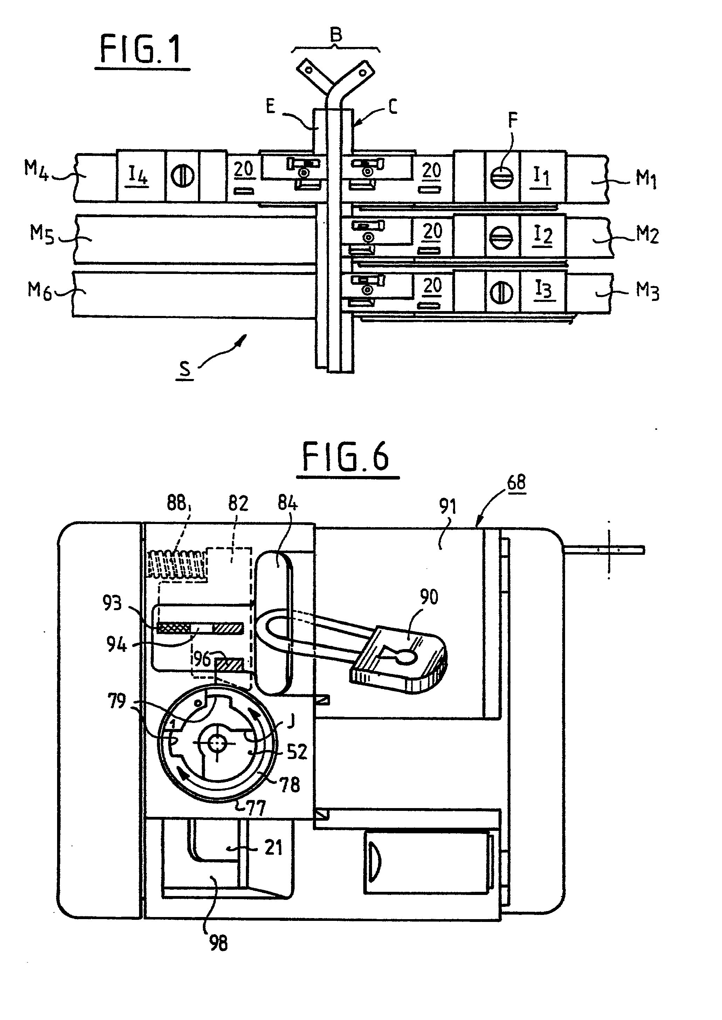

Sur la figure 1, on a représenté un système S de distribution de courant électrique à partir d'une colonne C qui comprend un jeu de barres omnibus B verticales non coplanaires situées dans différents plans parallèles verticaux, et une enveloppe de protection E disposée autour des barres.

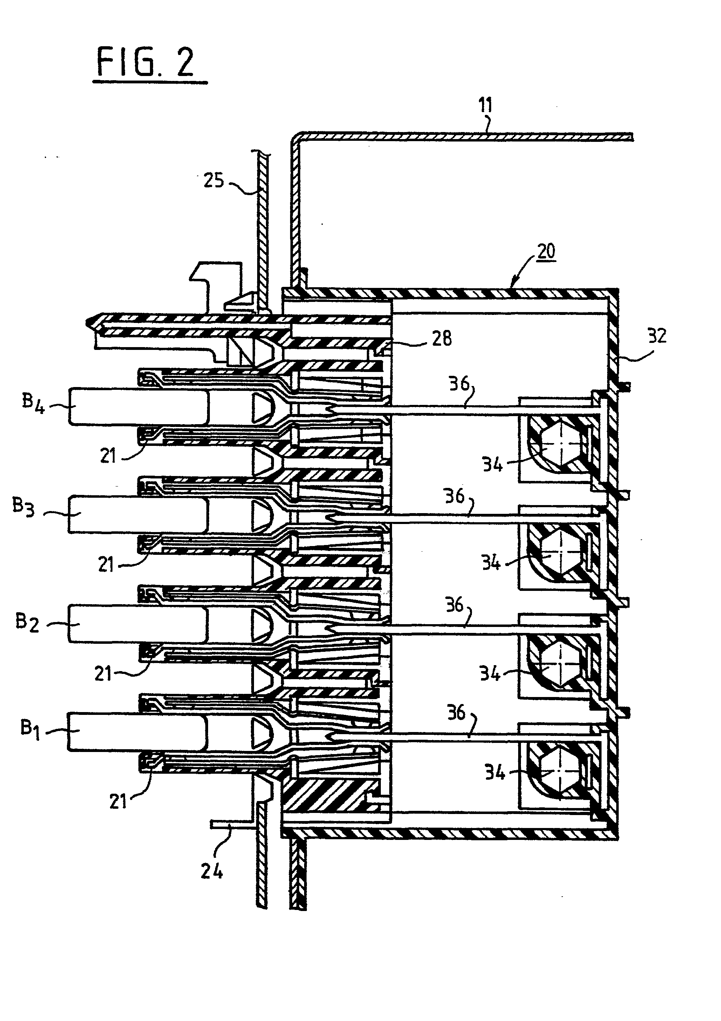

On voit mieux sur la figure 2 la disposition des barres omnibus de la colonne référencées $B_1$ - $B_4$ ; celles-ci sont par exemple au nombre de quatre et correspondent dans ce cas aux conducteurs d'un réseau électrique triphasé avec neutre ; bien entendu, les barres B peuvent être en nombre inférieur ou supérieur.

Le système de distribution illustré sur la figure 1 est conçu pour la fixation et le raccordement électrique d'appareils interrupteurs, tels que par exemple des contacteurs, disjoncteurs, contacteurs-disjoncteurs ou interrupteurs proprement dits, auxquels sont éventuellement associés des dispositifs annexes non figurés tels que des auxiliaires de protection, des fusibles, des auxiliaires de télécommande. A cet effet, le système S de la figure 1 se compose de plusieurs supports formant des modules $M_1$ - $M_6$ qui s'étendent dans une direction parallèle aux plans des barres et qui sont disposés par exemple bilatéralement par rapport à la colonne C sur les flancs verticaux opposés de celle-ci.

Chaque support ou module comporte une partie fixe 11 visible sur la figure 2 qui vient s'appliquer par tout moyen approprié sur l'un des flancs de l'enveloppe de protection du jeu de barres, et une platine réglable en profondeur, c'est-à-dire perpendiculairement aux plans des barres, par rapport à la partie fixe.

Comme on le voit bien sur la figure 1, chacun des quatre supports $M_1$ à $M_4$ porte, d'une part, un appareil interrupteur, respectivement $I_1$ à $I_4$, par exemple équipé d'un bouton ou d'une manette de commande manuelle symbolisé en F et, d'autre part, un organe de prise de courant sectionnable désigné globalement par la référence 20 et agencé entre le flanc de l'enveloppe de protection du jeu de barres et l'appareil interrupteur associé.

On notera que le système représenté peut être installé de manière autonome ou dans une enveloppe constituée par exemple par une armoire.

Selon un mode de réalisation préféré illustré à la figure 2, l'organe de prise de courant sectionnable 20 est un bloc moulé en matière isolante, de forme générale sensiblement parallélépipédique, qui est rapporté sur la partie fixe 11 du module correspondant à l'aide de moyens de fixation, et qui est muni de pinces 21 de prise de courant embrochables sur les barres de distribution $B_1$ - $B_4$ par introduction dans une trappe 24 prévue dans le flanc correspondant 25 de l'enveloppe perpendiculaire aux plans des barres.

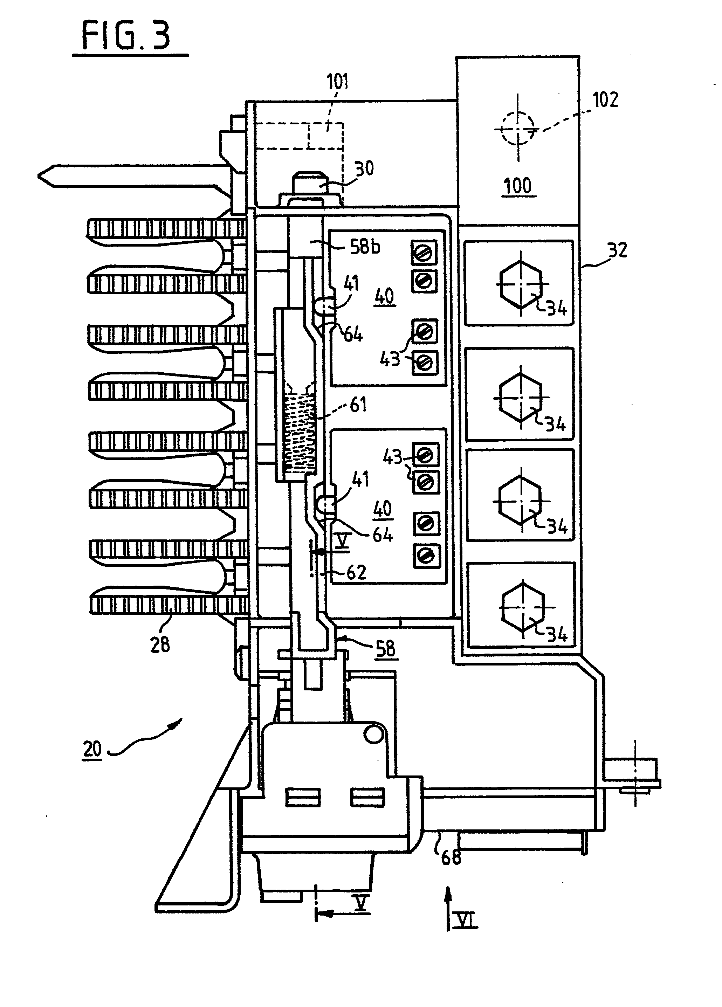

Les pinces 21 sont logées à demeure dans des cavités traversantes adjacentes ménagées dans un coulisseau 28 en matière isolante et elles sont débrochables des barres omnibus $B_1$ - $B_4$ par translation du coulisseau 28 dans une direction parallèle aux plans des barres, lequel coulisseau est commandé par un arbre fixe rotatif 30 (figure 3) dont l'axe s'étend dans une direction perpendiculaire au sens de déplacement du coulisseau.

Le bloc 20, figure 2, présente également une partie fixe 32 qui porte, d'une part, l'arbre rotatif de commande du coulisseau et, d'autre part, des moyens fixes de connexion électrique par exemple à vis 34 avec des bornes de puissance de l'appareil interrupteur associé ; chaque borne de connexion 34 est raccordée électriquement à la pince 21 associée, de préférence au moyen d'un couteau conducteur 36 fixé à l'une de ses extrémités dans la borne 34 et enserré à son autre extrémité entre les deux contacts de la pince 21.

Comme il apparaît sur la figure 3, le bloc 20 de prise de courant et de sectionnement comporte deux microcontacts identiques de précoupure, connus en soi et désignés globalement par la référence 40, qui sont chacun logés dans un boîtier monté sur la partie fixe 32 du bloc à l'aide de moyens de fixation. Chaque microcontact 40 est susceptible d'être actionné par un doigt rétractable 41 et présente des moyens de connexion électrique par exemple à vis 43 avec les bornes de commande de l'appareil interrupteur associé, le déclenchement de ce dernier étant produit en réponse à l'actionnement du microcontact. Il est à noter que le bloc 20 peut ne comporter qu'un seul microcontact de précoupure au lieu de deux comme dans l'exemple figuré, sans s'écarter pour autant de l'esprit de l'invention.

Comme on le verra en détail plus loin, le microcontact de précoupure constitue en soi une sécurité électrique pour le circuit de puissance, en ce sens que son actionnement provoque la mise hors tension du circuit avant sectionnement.

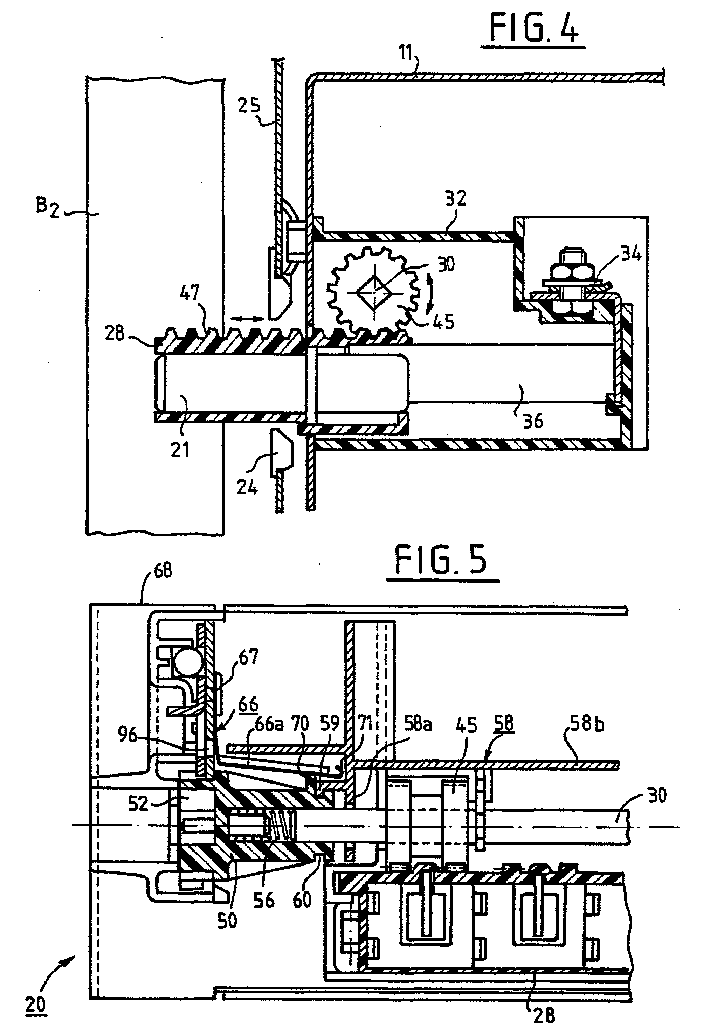

La figure 4 montre un exemple d'un type de liaison de transformation de mouvement, à pignon et crémaillère, qui est utilisée pour permettre le mouvement de translation du coulisseau porte-pinces en réponse à la rotation de l'arbre de commande. Ainsi, figure 4, on a repéré en 45 le pignon qui est monté sur l'arbre rotatif 30, ce dernier étant par exemple de section droite carrée, et qui engrène avec la crémaillère 47 formée sur la face supérieure du coulisseau dans une direction parallèle aux plans des barres omnibus ; la pince 21 est représentée sur la figure 4 en position embrochée sur l'une des barres omnibus, par exemple sur celle référencée $B_2$.

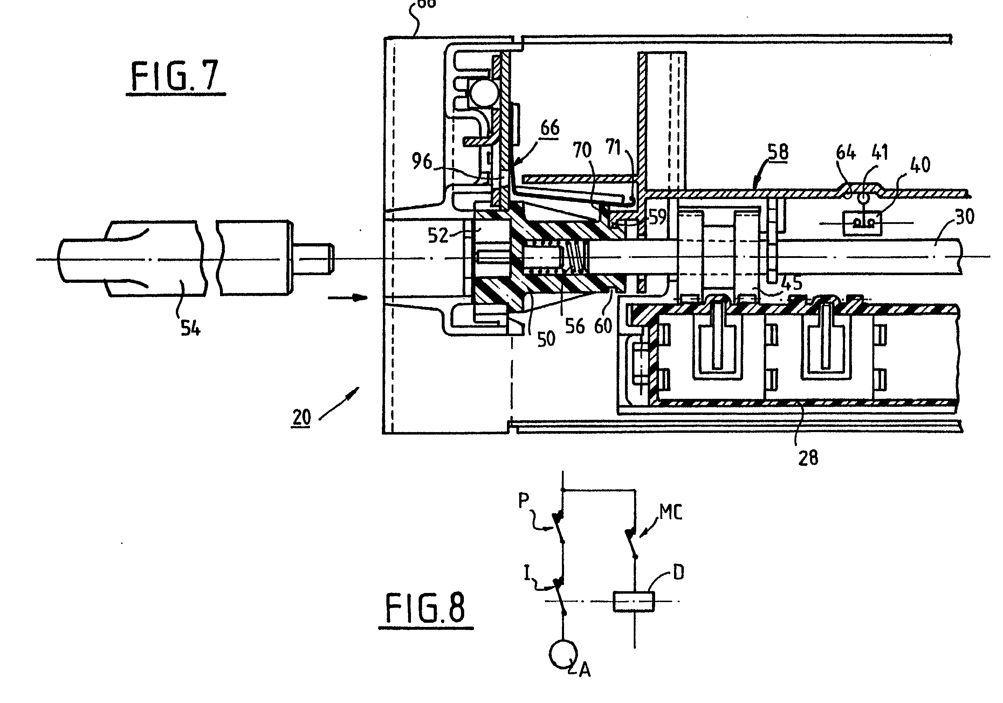

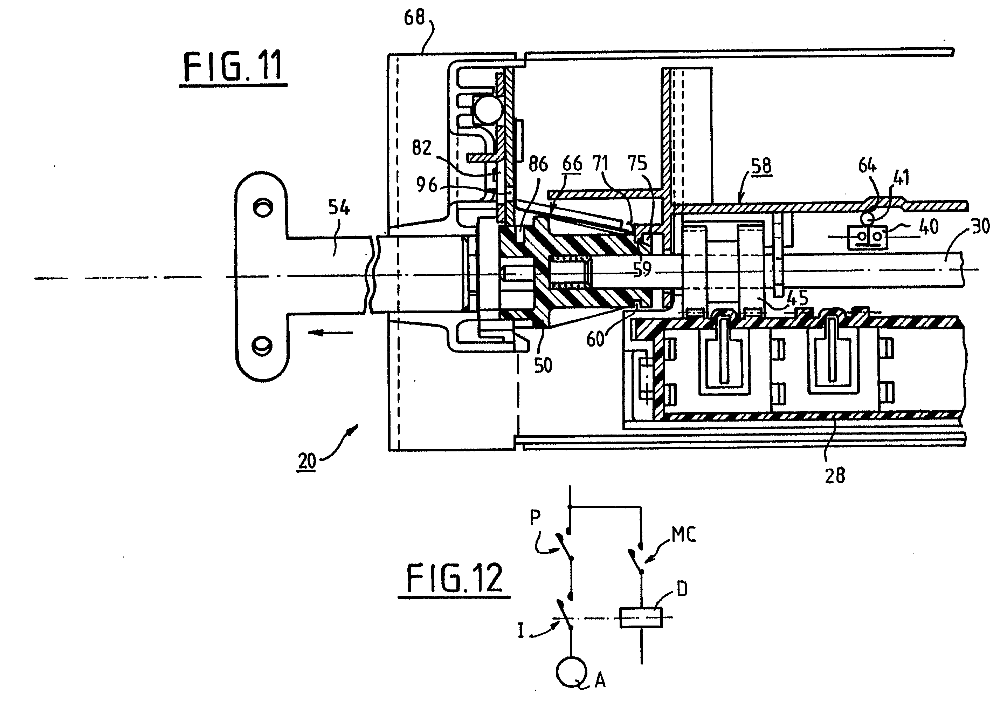

Sur la figure 5, on a représenté en 50 une noix d'entraînement en rotation de l'arbre 30 qui est montée en face avant sur celui-ci, et qui est pourvue en face arrière d'un logement approprié 52 destiné à recevoir de façon conjuguée un organe de commande manuelle tel que par exemple une clé de manoeuvre 54 (figures 7, 11) ; la clé présente une empreinte asymétrique de même profil que celui illustré en J sur la figure 6 pour son logement conjugué 52. La noix 50, figure 5, peut également être guidée axialement sur l'arbre 30 en étant sollicitée de façon classique par un ressort de rappel 56, de manière à être susceptible d'une légère course axiale vers l'arrière par rapport à l'arbre (noix enfoncée) sous l'action d'un effort de pression exercé par la clé lors de son introduction dans le logement 52 ; la noix est rappelée après relâchement de l'effort de pression.

On notera que l'organe de commande actionnant la noix peut être du type autre que manuel, comme par exemple du type électrique, pneumatique ou hydraulique, sans sortir du cadre de l'invention.

Selon une particularité de l'invention, le bloc 20 de prise de courant sectionnable, sur les figures 3 et 5, comporte une pièce de transmission désignée globalement par la référence 58 et destinée à commander les deux microcontacts de précoupure 40 (figure 3) avant sectionnement. Cette pièce de transmission 58 présente une forme générale sensiblement de L dont la branche verticale 58a (figure 5) se termine par deux pattes venant se clipser, avec un léger jeu, autour de l'arbre 30, et dont la branche horizontale 58b parallèle à l'axe de l'arbre est montée, avec un léger jeu, dans un palier prévu dans le bloc.

Comme il apparaît sur la figure 5, la branche verticale 58a porte d'équerre un ergot en forme de crochet 59 dont le nez est destiné à être en engagement avec une gorge ou rainure annulaire 60 creusée dans la noix 50 du côté de sa face avant, de manière à solidariser la pièce de transmission 58 avec la noix 50. Ainsi, dans cette disposition, la noix 50 entraîne en translation la pièce 58 vers l'arrière par rapport à l'arbre 30 sous l'action d'un effort de pression exercé par la clé lors de son engagement dans le logement 52 ; au cours de son déplacement vers l'arrière, la pièce 58 vient solliciter un ressort 61 représenté en pointillés sur la figure 3.

La branche horizontale 58b de la pièce de transmission porte, sensiblement sur toute sa longueur, une paroi verticale 62, visible en vue de dessus sur la figure 3, contre laquelle sont en appui les deux doigts rétractables 41 d'actionnement des deux microcontacts respectifs 40. Cette paroi 62 présente, sur toute sa hauteur, deux échancrures dotées de rampes respectives 64 de même inclinaison qui sont disposées de manière à attaquer respectivement les deux doigts 41 lors du déplacement vers l'arrière de la pièce de transmission, de sorte que lesdits doigts ainsi sollicités provoquent l'actionnement simultané des deux microcontacts de précoupure 40.

On notera que la pièce de transmission munie de son crochet 59 et de sa paroi verticale échancrée 62, vient avantageusement de moulage à l'aide d'une matière isolante.

Le bloc de prise de courant sectionnable, conforme à l'invention, comporte également des moyens souples qui sont susceptibles, d'une part, d'occuper une position d'escamotage tant au cours de la précoupure par translation de la pièce de transmission 58 qu'au cours d'une grande partie du mouvement de sectionnement par rotation de l'arbre 30 choisie par exemple trois quarts de tour et, d'autre part, de retenir en fin de mouvement de sectionnement la pièce de transmission 58 dans sa position prise après translation.

Sur la figure 5, ces moyens souples escamotables de retenue sont constitués par exemple par un ressort à lame 66 plié presque d'équerre et fixé à l'une de ses extrémités 67 sur un plastron isolant 68 venant se fixer par exemple par encliquetage en face avant du bloc de sectionnement 20 (figure 3). L'escamotage du ressort 66 est assuré au moyen d'une came en arc de cercle 70 prévue en surface de la noix 50, à proximité de la gorge 60 de celle-ci, et coopérant en appui avec la branche inclinée 66a du ressort durant la précoupure par translation et le sectionnement par rotation trois quarts de tour, la came 70 étant agencée de manière à s'effacer de la branche 66a vers la fin du mouvement de sectionnement ; l'extrémité libre 71 du ressort 66 légèrement recourbée pour former une butée venant coopérer, suite à l'effacement de la came, avec l'ergot 59 de la pièce de transmission 58 à la fin du mouvement de sectionnement.

La gorge annulaire 60 de la noix 50 est dotée d'une rampe de dégagement repérée en 75 sur la figure 11, qui débouche sur l'extérieur en face avant de la noix ; cette rampe 75 est située sur la noix de manière à venir en regard de l'ergot 59 de la pièce de transmission 58 à la fin du mouvement de sectionnement par rotation, trois quarts de tour dans l'exemple choisi, de l'arbre 30. Ainsi, dans la position de sectionnement, la noix 50 est susceptible d'être rappelée seule (vers l'avant par rapport à l'arbre) lors du retrait de la clé de manoeuvre, en de désolidarisant de la pièce de transmission 58 par passage de l'ergot 59 par la rampe 75, laquelle pièce 58 est retenue par son ergot en butée sur l'extrémité 71 du ressort à lame 66.

La figure 6 représente la face frontale du plastron isolant 68 qui vient se fixer en face avant du bloc de prise de courant sectionnable 20 (figure 3). Ce plastron 68, figure 6, présente une partie tubulaire 77 venant en saillie et étant disposée coaxiale à la noix pour permettre l'introduction de la clé dans le logement conjugué 52. Cette partie tubulaire 77 est dotée en face frontale d'une facette annulaire 78 susceptible de former butée et munie de deux encoches 79 pour l'introduction et le retrait de la clé de commande du sectionnement et du réarmement, par l'intermédiaire d'un ergot conjugué (non figuré) porté par la clé. Ces deux encoches 79 sont d'autre part positionnées angulairement l'une par rapport à l'autre, sans être symétriques, suivant l'angle de rotation choisi pour le mouvement de commande du sectionnement (ou du réembrochement), c'est-à-dire 270° dans l'exemple indiqué précédemment. La forme asymétrique de la clé et la disposition des deux encoches 79 assurent donc que la clé ne peut être engagée et retirée que dans les deux positions "sectionné" (repérée par l'indication "0") et "réarmé" (repérée par l'indication "1") par rotation trois quarts de tour pour passer de l'une à l'autre en interdisant notamment le retrait de la clé dans sa position intermédiaire.

Le plastron 68 porte en face arrière un volet vertical métallique 82 formant verrou, représenté en pointillés sur la figure 6, qui est conformé et placé de manière à être bloqué par butée contre la noix 50 dans la position d'embrochement ; dans cette position, le volet 82 obture une fenêtre verticale oblongue 84 ménagée dans le plastron. Le noix 50 est dotée à proximité de sa face arrière, d'une encoche d'engagement repérée en 86 sur la figure 11, qui est en forme d'arc de cercle sous-tendu par un fond plat ouvert d'un côté, et qui est située de manière à venir dans le prolongement latéral du volet 82 à la fin du mouvement de sectionnement après retrait de la clé. Ainsi, dans la position de sectionnement, le volet 82 une fois débloqué peut être déplacé en s'engageant par coulissement latéral dans l'encoche et en venant solliciter un ressort 88 ; l'encoche 86 est taillée dans la noix 50 de façon qu'en fin de course, le volet 82 vienne en butée en fond d'encoche et laisse entièrement découverte la lumière 84 pour permettre un verrouillage du type "3 cadenas" du bloc. Sur la figure 6, on a illustré en 90 un cadenas introduit dans la lumière 84 et logé dans un évidement approprié 91 prévu dans le plastron, après déplacement de droite à gauche du volet. Il est à noter que le volet 82 est dimensionné de manière à prendre appui contre le cadenas une fois introduit tout en assurant l'immobilisation de la noix par son engagement dans l'encoche 86.

Le volet 82 peut être déplacé manuellement à l'aide par exemple d'un organe formant tirette 93 (figure 6) qui est réalisée d'une seule pièce avec le volet en faisant saillie hors d'une ouverture rectangulaire de guidage 94 pratiquée dans le plastron 68, et qui est susceptible de se déplacer dans cette ouverture 94 dans le même sens que le volet 82, ce dernier étant susceptible d'être rappelé sous l'effet du ressort 88.

Le plastron 68 présente également un orifice d'accès 96 placé en regard de la branche verticale du ressort à lame 66 comme il apparaît sur la figure 5, et destiné, en position "sectionné", mais "non cadenassé", à l'introduction d'un outil actionnant le ressort pour une opération de "marche à vide" de l'appareil interrupteur. On notera qu'en position "sectionné - cadenassé", comme illustré sur la figure 6, le volet 82 obture l'orifice 96, assurant ainsi un verrouillage complet du bloc.

On voit en bas à gauche de la face frontale du plastron 68 de la figure 6, une fenêtre 98 permettant à l'opérateur de constater la coupure effective par apparition de l'extrémité des pinces 21 dans cette fenêtre en position de sectionnement.

L'état de sectionnement du bloc 20 peut également être indiqué par l'allumage d'un voyant lumineux (non figuré) en réponse à l'actionnement d'un microcontact classique fixé sur le bloc et repéré en 100 sur la figure 3 ; le coulisseau 28 porte en saillie sur l'un de ses bords, une came en forme de rampe, représentée schématiquement par les pointillés 101 sur la figure 3, qui vient attaquer un doigt 102 d'actionnement du microcontact au cours du débrochage des pinces par translation du coulisseau.

On va maintenant expliquer la manière d'effectuer une manoeuvre de sectionnement en se référant aux figures 7 à 16.

La figure 7 représente la position initiale "embroché" du bloc 20 dans laquelle la noix 50 et la pièce de transmission 58 sont chacune en position de repos et sont solidaires l'une de l'autre par engagement de l'ergot 59 dans la gorge 60 ; la came 70 coopère avec le ressort à lame 66. Dans cette position, les deux microcontacts de précoupure, dont un seul est illustré schématiquement en 40 sur la figure 7, sont au repos, par exemple à l'état de fermeture. La figure 8 montre, sous forme de contacts, le schéma électrique correspondant à cette position d'embrochement : les contacts P (liaison pinces-barres omnibus), MC (microcontact de précoupure) et I (contact de l'appareil interrupteur) sont tous fermés ; sur cette figure 8, on a repéré en D le déclencheur de l'appareil interrupteur et en A un actionneur quelconque alimenté à partir des barres omnibus.

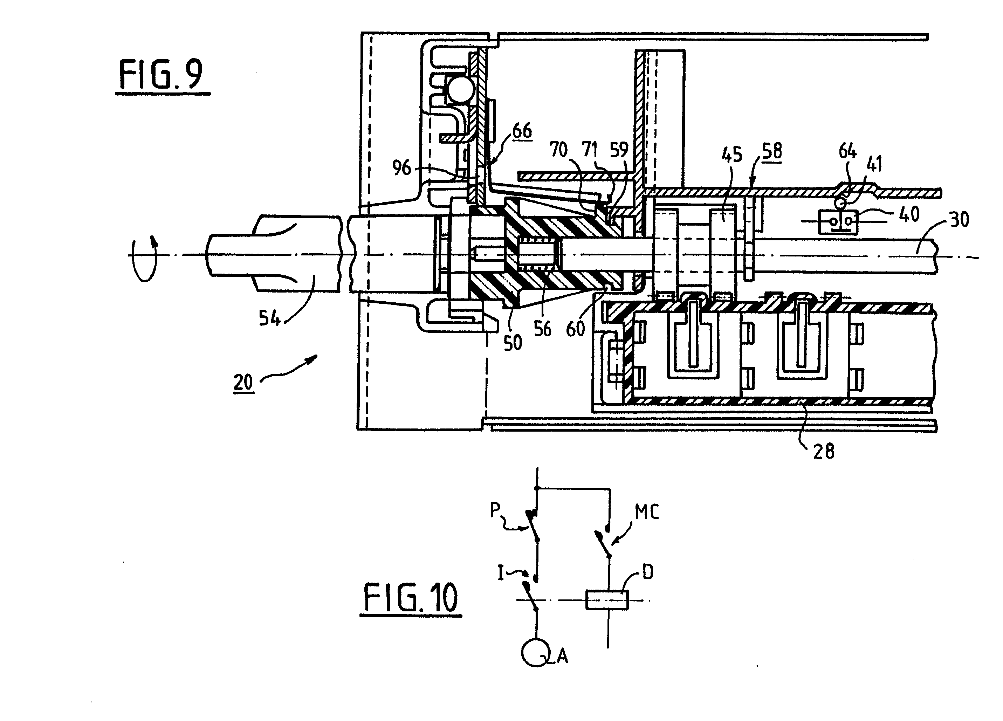

L'opérateur introduit la clé 54 de commande du sectionnement dans le logement conjugué 52 de la noix 50, cette introduction n'étant possible qu'à travers l'encoche repérée par l'indication "1" (figure 6), puis exerce une poussée axiale sur la clé qui produit alors un déplacement vers l'arrière par rapport à l'arbre 30 de l'ensemble noix 50 - pièce de transmission 58. Au cours de ce déplacement, figure 9, le doigt 41 de chaque microcontact 40 est attaqué par la rampe 64 associée, actionnant ainsi les microcontacts de précoupure qui s'ouvrent (figure 10) et qui provoquent le déclenchement de l'appareil interrupteur via le déclencheur D (figure 10) ; le circuit de puissance est donc mis hors tension avant sectionnement.

En maintenant l'effort de pression exercé par la clé (microcontacts ouverts) et en faisant tourner celle-ci de trois quarts de tour, l'opérateur produit alors la rotation de l'arbre 30 et le déplacement du coulisseau porte-pinces 28, l'ergot 59 étant en appui glissant dans la gorge annulaire 60 de la noix. En fin de rotation de la clé, comme il apparaît sur la figure 11, la came de la noix 50 s'est effacée pour permettre au ressort 66 de venir en butée contre l'ergot 59 de la pièce de transmission, tandis que la rampe 75 vient se positionner en regard dudit ergot ; en outre, dans la position de sectionnement (contact P ouvert, figure 12), l'encoche 86 ménagée dans la noix 50 se présente, vue en coupe sur la figure 11, du côté du volet 82 porté par le plastron 68.

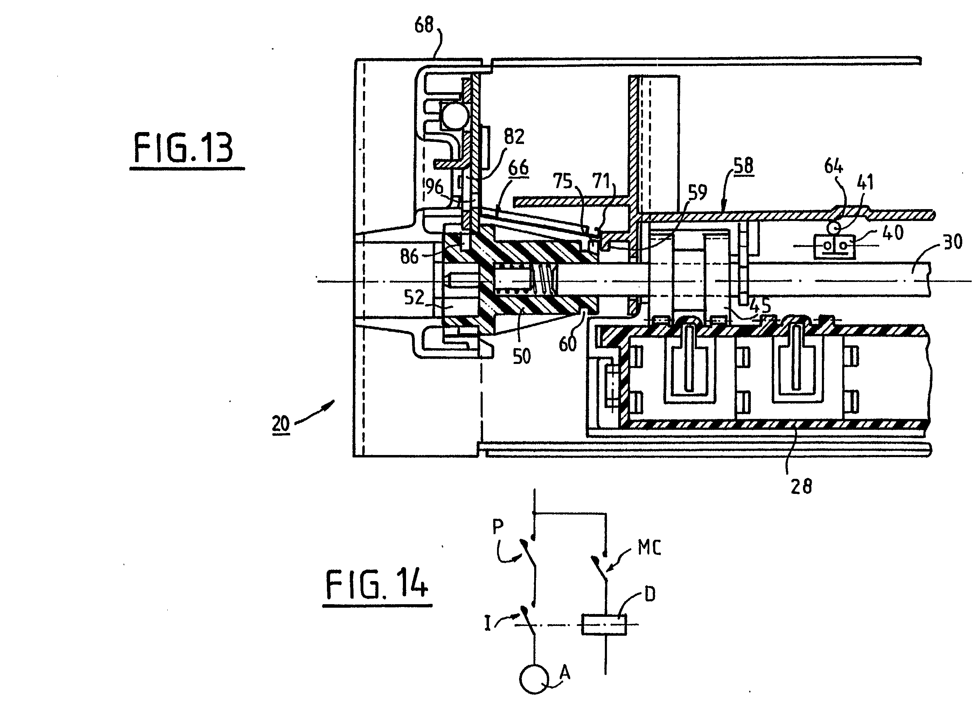

Lorsque le sectionnement par rotation trois quarts de tour de la clé de manoeuvre 54 est achevé, l'opérateur peut alors retirer la clé par l'encoche coïncidante repérée par l'indication "0" (figure 6), ce qui produit le rappel de la noix 50 seule, cette dernière se désolidarisant de la pièce de transmission 58 par passage de l'ergot 59 par la rampe 75, comme montré à la figure 13 ; la pièce de transmission 58 est retenue en butée contre le ressort 66, de sorte que les microcontacts de précoupure (MC, figure 14) restent ouverts.

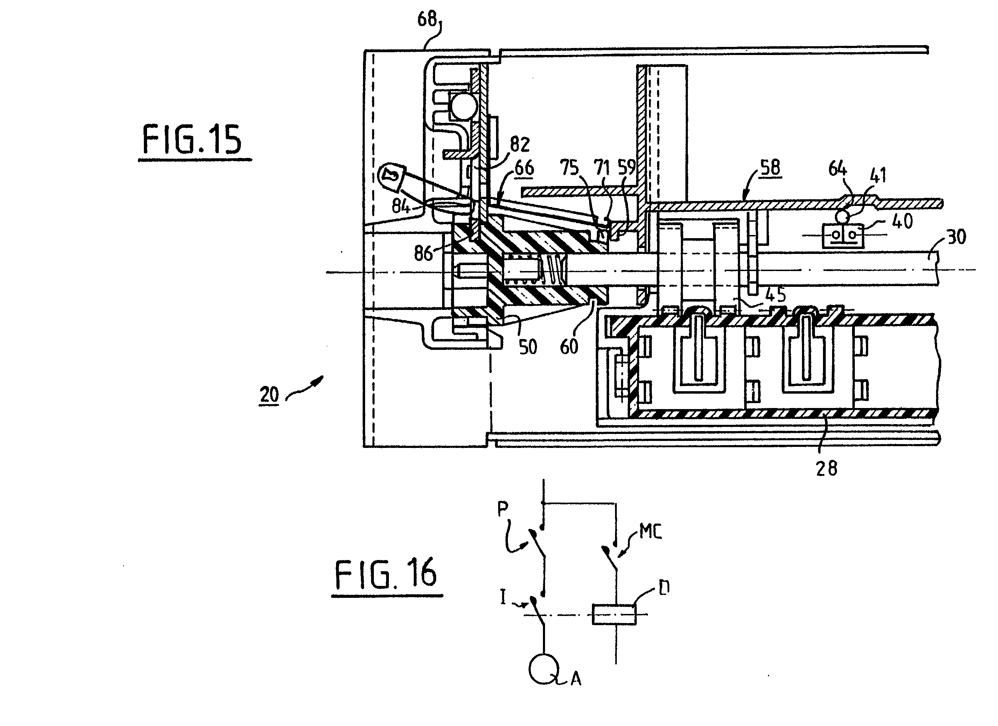

Par le rappel de la noix 50, l'encoche 86 de celle-ci vient en regard, vue en coupe sur la figure 13, du volet 82, de sorte que l'opérateur peut ensuite faire coulisser latéralement le volet dans l'encoche de façon à immobiliser la noix et libérer la lumière 84 (figure 6) ; l'opérateur peut alors procéder au verrouillage du bloc par cadenassage, comme le montre la figure 15 ; la figure 16 (contacts ouverts) représente le schéma correspondant à la position "sectionné -cadenassé".

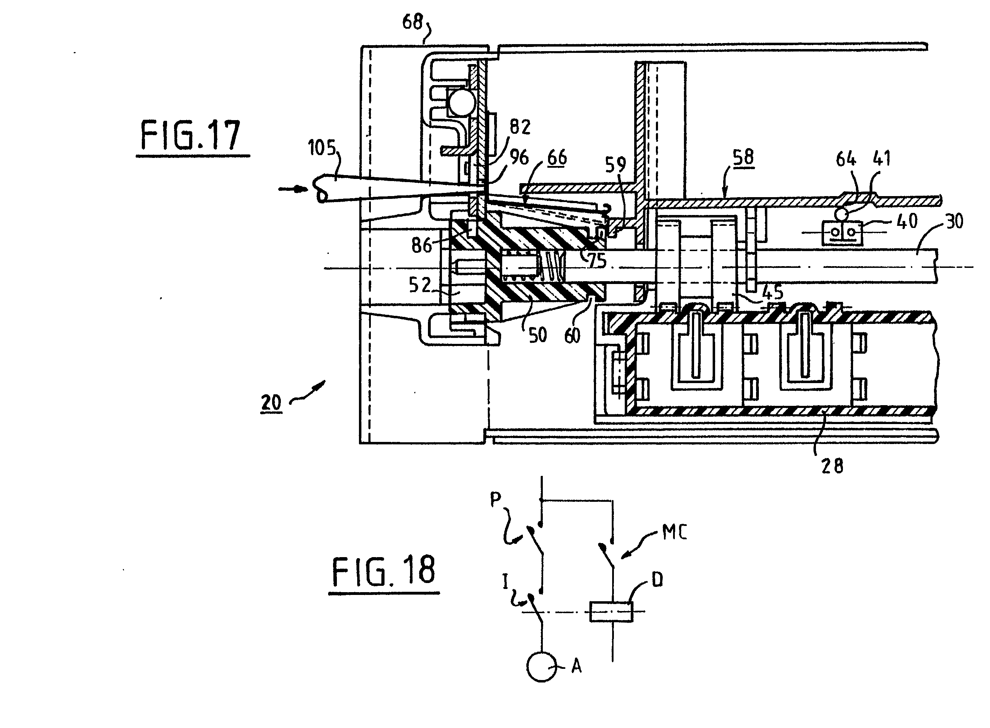

De plus, à partir de la position de sectionnement telle qu'illustrée sur la figure 13, l'opérateur peut tester l'appareil interrupteur et vérifier électriquement des auxiliaires de celui-ci ; ce contrôle à vide s'effectue de la manière suivante, en se référant aux figures 17 à 22.

L'opérateur introduit un outil 105, figure 17, par l'orifice 96 ménagé dans le plastron 68 pour dégager le ressort 66 de sa position en butée contre l'ergot 59 de la pièce de transmission ; le ressort 66 passe donc de sa position illustrée en pointillés sur la figure 17 à celle montrée en traits forts sous l'action de l'outil, la figure 18 représentant le schéma correspondant à la position "sectionné" (contacts ouverts).

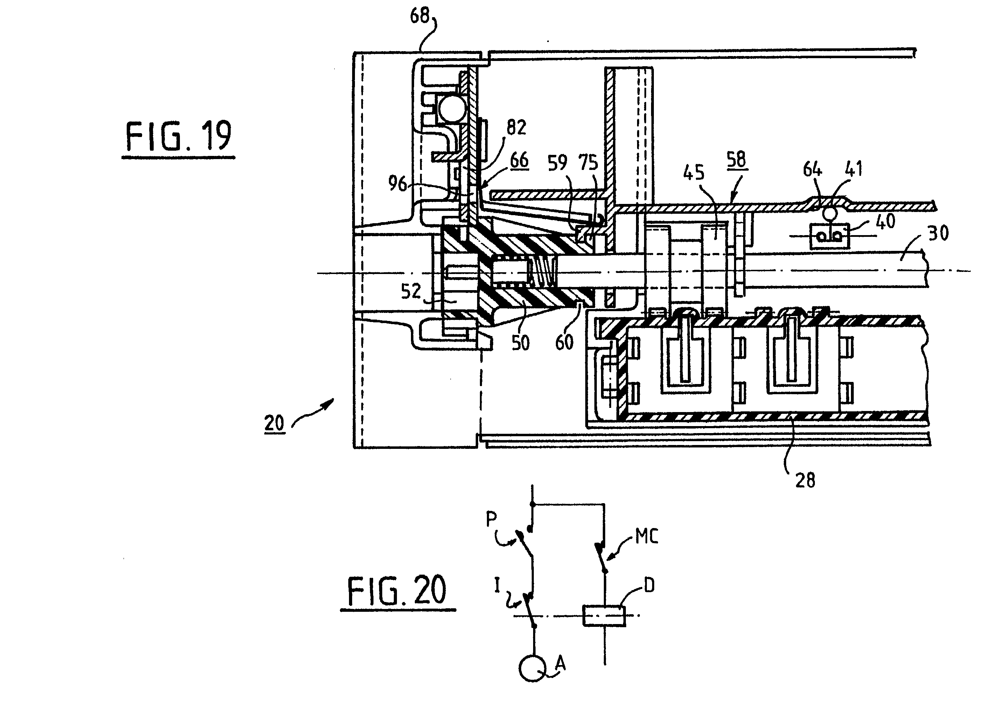

L'escamotage du ressort 66 produit alors le rappel de la pièce de transmission 58 sous l'action de son ressort (61, figure 3), l'ergot 59 de la pièce 58 s'engageant dans la gorge annulaire 60 de la noix via la rampe 75, comme illustré sur la figure 19. Au cours de ce rappel, les microcontacts de précoupure 40 quittent leurs rampes respectives associées 64 et reviennent donc dans leur état de repos, c'est-à-dire de fermeture (figure 20).

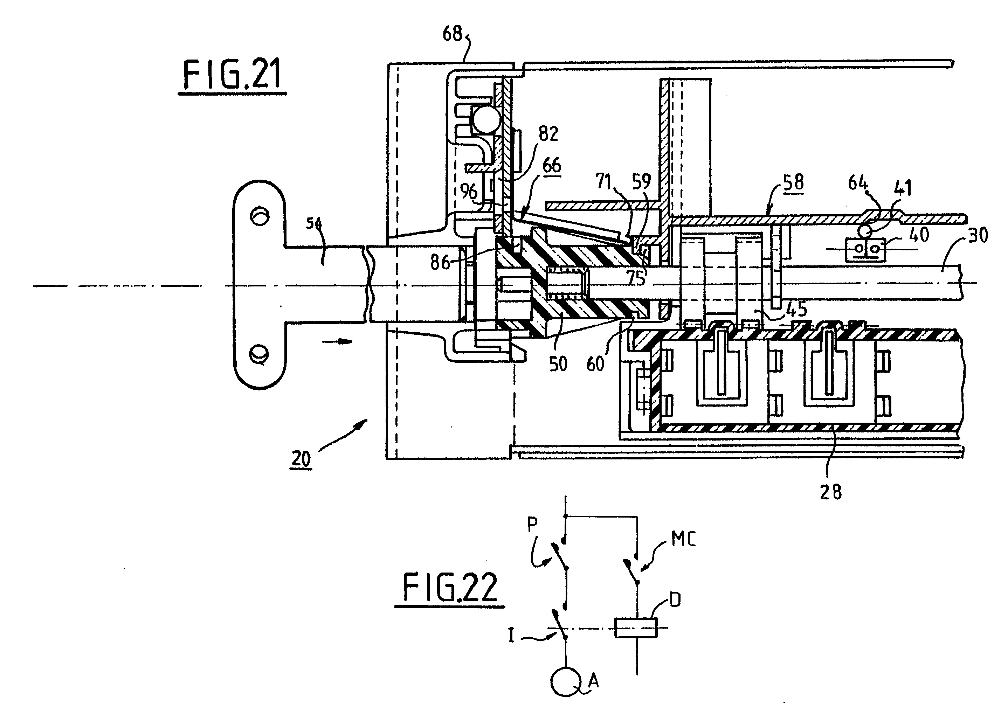

En fin de contrôle, l'opérateur ramène le bloc 20 dans sa position "sectionné" simplement en introduisant la clé 54 dans le logement 52 de la noix 50 et en exerçant une poussée axiale de manière à déplacer vers l'arrière par rapport à l'arbre l'ensemble noix - pièce de transmission, comme illustré sur la figure 21 ; le ressort à lame 66 reprend donc sa position en butée sur la pièce 58, tandis que les microcontacts 40 sont de nouveau actionnés par attaque des rampes associées 64 et s'ouvrent (figure 22) ; l'opérateur retire ensuite la clé de la même manière que décrite à propos de la figure 13.

Lorsqu'après sectionnement, l'opérateur veut réembrocher les pinces sur les barres omnibus, il agit d'une manière réciproque à celle décrite précédemment, à savoir :

- introduction de la clé et poussé axiale pour engager l'ergot de la pièce de transmission dans la gorge annulaire de la noix via la rampe (microcontacts ouverts),

- rotation trois quarts de tour de la clé pour produire la rotation de l'arbre et le déplacement du coulisseau en direction des barres, les pinces venant s'embrocher sur les barres en fin de course ; l'escamotage du ressort à lame est assuré par la came,

- retrait de la clé qui produit le rappel de l'ensemble noix - pièce de transmission ; au cours de ce rappel, les microcontacts quittent leurs rampes associées et reviennent alors dans leur état de repos, c'est-à-dire de fermeture.

## Revendications

1. Dispositif de prise de courant sectionnable sur une colonne de distribution à barres omnibus parallèles non coplanaires, comportant :
- une partie fixe (32) portant des moyens (34) de connexion électrique à au moins un appareil interrupteur, ainsi qu'au moins un microcontact de précoupure (40) qui est actionné par des moyens de commande, ledit ou chaque appareil interrupteur occupant une position déclenchée en réponse à l'actionnement du ou de chaque microcontact ;
- une partie mobile en translation comprenant un coulisseau (28) qui porte des pinces (21) embrochables sur les barres et débrochables de celles-ci, le mouvement de translation du coulisseau étant produit pour assurer la prise de courant et respectivement le sectionnement ;
- des moyens de commande du sectionnement comprenant un arbre rotatif (30) dont la rotation commande le mouvement de translation du coulisseau par l'intermédiaire d'un organe de transformation de mouvement, et une noix rotative (50) d'entraînement de l'arbre qui est montée à translation sur l'arbre en étant sollicitée par un ressort de rappel, la noix étant actionnée par une organe de commande (54) ; caractérisé en ce que les moyens de commande de la précoupure comportent une pièce de transmission (58) mobile en translation en étant sollicitée par un autre ressort de rappel et présentant au moins une rampe (64) d'attaque d'un organe actionnant le microcontact respectif (40), la pièce de transmission occupant, en position d'embrochement, une première position de repos dans laquelle ledit ou chaque appareil interrupteur est enclenché, et en ce que la pièce de transmission (58) comprend également un ergot (59) en forme de crochet venant s'engager, pour la position d'embrochement, dans une gorge annulaire (60) creusée sur le pourtour externe de la noix (50) à l'une de ses extrémités pour permettre, dans cette position d'embrochement, le déplacement en translation à la fois de la noix (50) selon l'axe de l'arbre sous l'action d'un effort de pression exercé sur celle-ci par l'organe de commande (54), et de la pièce de transmission (58) à partir de sa position de repos dont la ou chaque rampe vient solliciter, au cours de ce déplacement, l'organe actionnant le microcontact respectif de manière à provoquer le déclenchement de l'appareil interrupteur respectif, la commande du sectionnement par rotation de l'arbre s'opérant en fin de déplacement de l'ensemble noix - pièce de transmission et en maintenant l'effort de pression, l'ergot (59) étant en appui glissant dans la gorge (60) de la noix lors de la commande du sectionnement.

2. Dispositif selon la revendication 1, caractérisé en ce que la pièce de transmission (58) présente une forme générale sensiblement de L dont l'une (58b) des branches s'étend dans une direction sensiblement parallèle à l'axe de l'arbre (30) et porte, sensiblement sur toute sa longueur, une paroi verticale (62) dans laquelle est formée la ou chaque rampe d'attaque (64), et dont l'autre branche (58a) est agencée au voisinage de la noix et porte d'équerre l'ergot (59) en forme de crochet destiné à être en engagement dans la gorge de la noix lors de la commande de la précoupure et de la commande du sectionnement.

3. Dispositif selon l'une des revendications 1 et 2, caractérisé en ce que des moyens souples escamotables (66) sont prévus pour retenir, uniquement en position de sectionnement, la pièce de transmission (58) dans une seconde position qu'elle occupe après son déplacement en translation, et en ce que la gorge (60) de la noix est dotée d'une rampe de dégagement (75) orientée vers l'extérieur et venant en regard de l'ergot (59) de la pièce de transmission uniquement pour la position de sectionnement afin de permettre, dans cette position, le déplacement en sens inverse de la noix seule selon l'axe de l'arbre sous l'action de son ressort après relâchement de l'effort de pression.

4. Dispositif selon la revendication 3, caractérisé en ce que la noix (50) est dotée d'une came (70), et en ce que les moyens souples escamotables de retenue de la pièce de transmission sont constitués par un ressort à lame (66) dont l'une (67) des extrémités est rendue fixe et dont l'autre extrémité (71) constitue une butée destinée à coopérer avec l'ergot (59) de la pièce de transmission uniquement en position de sectionnement, le ressort (66) coopérant avec la came (70) de la noix lors de la commande de la précoupure pour assurer son escamotage et venant se dégager de la came lors de la commande du sectionnement pour permettre à sa butée, dans la position de sectionnement, de retenir la pièce de transmission (58) dans sa seconde position.

5. Dispositif selon l'une des revendications précédentes, caractérisé en ce que la partie fixe (32) comprend un plastron (68) qui est monté face à la noix et qui s'étend dans une direction perpendiculaire à l'axe de l'arbre rotatif (30), en ce que le plastron porte en face arrière un volet vertical (82) blocable en position d'embrochement pour laquelle il obture une lumière (84) ménagée dans le plastron, et en ce qu'une encoche (86) est prévue en surface de la noix (50) en étant située de manière à venir en regard du volet uniquement dans la position de sectionnement, de sorte que dans cette position, le volet est susceptible de s'engager par translation dans l'encoche sous l'action d'une pièce de commande manuelle (93), cette dernière déplaçant le volet à l'intérieur de l'encoche de manière qu'en fin de course, ledit volet vienne en butée en fond d'encoche pour assurer l'immobilisation de la noix (50), et laisse découverte la lumière pour permettre l'introduction d'au moins un cadenas (90).

6. Dispositif selon la revendication 5, caractérisé en ce que la pièce de commande manuelle actionnant le volet est constituée par une tirette (93) qui est réalisée d'une pièce avec le volet (82) et qui s'étend dans une direction perpendiculaire au sens de déplacement du volet en faisant saillie d'une ouverture (94) pratiquée dans le plastron.

7. Dispositif selon l'une des revendications 5 et 6, caractérisé en ce que la noix rotative (50) comporte à son autre extrémité un logement (52) de contour asymétrique, et en ce que le plastron (68) présente une avancée (77) formant une collerette annulaire coaxiale à la noix et dotée de deux encoches d'introduction (79) réparties respectivement selon deux axes perpendiculaires, le logement de la noix et l'une ou l'autre des encoches de la collerette étant susceptibles de recevoir l'organe de commande (54) et coïncidant seulement dans la position d'embrochement et respectivement dans la position de sectionnement.

8. Dispositif selon la revendication 7, caractérisé en ce que l'organe de commande (54) est une clé de manoeuvre qui est munie d'un ergot susceptible de s'engager dans l'une ou l'autre des encoches (79) de la collerette pour les positions respectives d'embrochement et de sectionnement, et en ce que l'ergot est susceptible de coopérer avec une portée (78) prévue sur la collerette afin d'interdire le retrait de la clé lors du sectionnement et du réembrochement.

9. Dispositif selon l'une des revendications 4 et 5, caractérisé en ce que le plastron (68) est muni d'un orifice d'accès (96) pour le passage d'un outil destiné à actionner le ressort à lame (66) de retenue de la pièce de transmission, ledit outil étant introduit uniquement dans la position de sectionnement pour permettre, dans cette position, l'escamotage du ressort à lame, la pièce de transmission (58) subissant un déplacement sous l'action de son ressort de rappel pour venir occuper sa position de repos dans laquelle l'appareil interrupteur respectif est enclenché, permettant un contrôle à vide dudit ou de chaque appareil interrupteur.

10. Dispositif selon l'une des revendications 5 à 9, caractérisé en ce que l'arbre rotatif (30) s'étend dans une direction perpendiculaire au sens de déplacement du coulisseau (28), et en ce que le plastron (68) présente également une fenêtre (98) de visualisation de l'état de sectionnement en étant placée de manière qu'en position de sectionnement, l'extrémité des pinces (21) portées par le coulisseau apparaisse dans la fenêtre.

11. Dispositif selon l'une des revendications précédentes, caractérisé en ce que la partie fixe (32) porte un microcontact supplémentaire (100) relié à une voyant lumineux et actionné par un élément de commande, et en ce que le coulisseau (28) est muni d'une came (101) qui coopère avec l'élément de commande dans la position de sectionnement pour provoquer, dans cette position, l'allumage du voyant lumineux en réponse à l'actionnement du microcontact, indiquant ainsi l'état de sectionnement.

**Patentansprüche**

1. Trennbare Stromentnahmevorrichtung, auf einer Verteilsäule mit parallelen, nicht koplanaren Sammelschienen, mit:
   – einem stationären Teil (32), der Mittel (34) für den elektrischen Anschluss an mindestens ein Schaltgerät aufweist, sowie mindestens einen Vorunterbrechermikrokontakt (40), der von Steuermitteln beaufschlagt wird, wobei besagtes oder jedes Schaltgerät bei Betätigung des oder jedes Mikrokontaktes eine ausgeschaltete Position einnimmt;
   – einem in Translation beweglichen Teil, der einen Schieber (28) aufweist, mit Klemmen (21), die auf die Schienen aufgesteckt und von diesen abgezogen werden können, wobei die Translationsbewegung des Schiebers bewirkt wird, um die Stromentnahme, bzw. Unterbrechung vorzunehmen;
   – Mitteln zur Auslösung der Unterbrechung, mit einem drehbaren Schaft (30), dessen Drehung die Translationsbewegung des Schiebers mittels eines Bewegungsumwandlungsorgans steuert und einem Drehzapfen (50) zum Antrieb des Schaftes, welcher verschiebbar auf den Schaft montiert ist und von einer Rückstellfeder beaufschlagt wird, wobei der Zapfen von einem Steuerorgan (54) betätigt wird, dadurch gekennzeichnet, dass die Mittel zur Auslösung der Vorunterbrechung ein in Translation bewegbares Übertragungsmittel (58) aufweisen, das von einer anderen Rückstellfeder beaufschlagt wird und das mindestens eine Schrägfläche (64) aufweist, zur Beaufschlagung eines Organs, welches den entsprechenden Mikrokontakt (40) betätigt, wobei das Übertragungsteil in der Stromentnahmeposition eine erste Ruhestellung einnimmt, in welcher das oder jedes Schaltgerät eingeschaltet ist und dass das Übertragungsmittel (58) ebenfalls einen Vorsprung (59) in Form eines Hakens aufweist, der, in der Stromentnahmeposition, in eine ringförmige Rinne (60) eingreift, welche im Aussenumfang des Zapfens (50) an einem seiner Enden ausgespart ist, um, in besagter Stromentnahmeposition die Translationsbewegung des Zapfens (50) gemäss der Schaftachse unter der Einwirkung einer vom Steuerorgan (54) auf diesen ausgeübten Druckkraft und des Übertragungsteils (58) aus seiner Ruhestellung zu ermöglichen, dessen Schrägfläche oder -flächen im Laufe dieser Bewegung das den entsprechenden Mikrokontakt betätigende Organ beaufschlagen, um das entsprechende Schaltgerät auszuschalten, wobei die Trennsteuerung durch Drehung des Schaftes am Ende der Verschiebung der Zapfen-Übertragungsteileinheit stattfindet, unter Beibehaltung des Drucks, und der Vorsprung (59) bei der Trennsteuerung in der Rinne (60) des Zapfens gleitend aufliegt.

2. Vorrichtung nach Anspruch 1, dadurch gekennzeichnet, dass das Übertragungsteil (58) die allgemeine Form eines L aufweist, dessen einer Schenkel (58b) sich in einer im wesentlichen zur Achse des Schaftes (30) parallelen Richtung erstreckt und im wesentlichen auf seiner ganzen Länge eine senkrechte Wand (62) trägt, in der die oder jede Beaufschlagungsschrägfläche (64) ausgebildet ist und dessen anderer Schenkel (58a) in der Nähe des Zapfens angeordnet ist und im rechten Winkel den hakenförmigen Vorsprung (59) trägt, welcher dazu bestimmt ist, bei einer Vorunterbrechungs- und Trennsteuerung in die Rinne des Zapfens einzugreifen.

3. Vorrichtung nach einem der Ansprüche 1 und 2, dadurch gekennzeichnet, dass elastische einziehbare Mittel (66) vorgesehen sind, um, einzig in der Trennstellung, das Übertragungsteil (58) in einer zweiten Position zu halten, die es nach seiner Translationsbewegung einnimmt und dass die Rinne (60) des Zapfens mit einer nach aussen gerichteten Freisetzungsrampe (75) versehen ist, welche, einzig in der Trennposition, sich gegenüber den Vorsprung (59) des Übertragungsteils begibt, um in dieser Position die Bewegung in entgegengesetzter Richtung des Zapfens allein gemäss der Zapfenachse zu ermöglichen, unter der Wirkung seiner Feder und nach dem Nachlassen des Drucks.

4. Vorrichtung nach Anspruch 3, dadurch gekennzeichnet, dass der Zapfen (50) mit einer Nocke (70) versehen ist und dass die elastischen, einziehbaren Mittel, die das Übertragungsteil zurückhalten, von einer Blattfeder (66) gebildet werden, deren eines Ende (67) stationär ist und deren anderes Ende (71) einen Anschlag bildet, der, einzig in der Trennposition, mit dem Vorsprung (59) des Übertragungsteils zusammenarbeitet und die Feder (66) mit der Nocke (70) des Zapfens bei einer Vorunterbrechungssteuerung zusammenarbeitet, um diesen einzuziehen und sich, bei der Trennsteuerung, von der Nocke löst, damit ihr Anschlag in der Trennstellung das Übertragungsteil (58) in der zweiten Position halten kann.

5. Vorrichtung nach einem der vorhergehenden Ansprüche, dadurch gekennzeichnet, dass der stationäre Teil (32) eine Platte (68) aufweist, die gegenüber dem Zapfen montiert ist und sich in eine Richtung senkrecht zur Achse des Drehschaftes (30) erstreckt, dass die Platte auf der Rückseite eine senkrechte Klappe (82) trägt, die in der Stromentnahmestellung blockiert werden kann, in der sie eine in der Platte angebrachte Öffnung (84) verschliesst und dass eine in der Oberfläche des Zapfens (50) vorgesehene Kerbe (86) so angeordnet ist, dass sie sich, einzig in der Trennstellung, der Klappe gegenüber befindet, sodass sich in dieser Position die Klappe durch Translation in die Kerbe schiebt, unter der Wirkung eines manuellen Steuerteils (93), welch letzteres die Klappe im Inneren der Kerbe verschiebt, bis diese, am Ende ihrer Bahn, gegen den Boden der Kerbe zum Anschlag kommt, um den Zapfen (50) ausser Bewegung zu setzen und die Öffnung freigibt, um mindestens ein Schloss (90) einzuführen.

6. Vorrichtung nach Anspruch 5, dadurch gekennzeichnet, dass das manuelle Steuerorgan, welches die Klappe betätigt, von einer, mit der Klappe (82) aus einem Stück gefertigten Zuglasche (93) gebildet wird, die sich in einer senkrecht zur Bewegungsrichtung der Klappe verlaufenden Richtung erstreckt und aus einer in der Platte angebrachten Öffnung (94) hervorragt.

7. Vorrichtung nach einem der Ansprüche 5 und 6, dadurch gekennzeichnet, dass der Drehzapfen (50) an seinem anderen Ende eine Behausung (52) von asymmetrischer Gestalt aufweist und die Platte (68) einen Vorsprung (77) in Form eines ringförmigen Flansches aufweist, der sich koaxial zum Zapfen erstreckt und mit zwei Einführungskerben (79) versehen ist, die jeweils gemäss zwei senkrecht zueinander verlaufenden Achsen angeordnet sind, wobei die Behausung des Zapfens und die eine oder die andere der Kerben des Flansches das Steuerorgan (54) aufnehmen können und nur jeweils in der Stromentnahmestellung und der Trennstellung zusammenfallen.

8. Vorrichtung nach Anspruch 7, dadurch gekennzeichnet, dass das Steuerorgan (54) ein Bedienungsschlüssel ist, der mit einem Vorsprung versehen ist, welcher jeweils in der Stromentnahme und der Trennstellung in die eine oder andere Kerbe (79) des Flansches eingreifen kann und dass der Vorsprung mit einer auf dem Flansch vorgesehenen Stützfläche (78) zusammenarbeiten kann, um bei der Trennung und erneuten Stromentnahme das Abziehen des Schlüssels zu verhindern.

9. Vorrichtung nach einem der Ansprüche 4 und 5, dadurch gekennzeichnet, dass die Platte (68) mit einer Zugangsöffnung (96) versehen ist, zum Durchlass eines Werkzeuges, welches die Blattfeder (66) betätigt, die das Übertragungsteil festhält, wobei besagtes Werkzeug nur in der Trennstellung eingeführt wird, um in dieser Position das Einziehen der Blattfeder zu ermöglichen und das Übertragungsteil (58) unter der Wirkung seiner Rückstellfeder verschoben wird, um seine Ruhestellung einzunehmen, in der das entsprechende Schaltgerät eingeschaltet ist und so eine unbelastete Kontrolle des oder jedes Schaltgerätes zu ermöglichen.

10. Vorrichtung nach einem der Ansprüche 5 bis 9, dadurch gekennzeichnet, dass der drehbare Schaft (30) sich in einer Richtung senkrecht zur Bewegungsrichtung des Schiebers (28) erstreckt und dass die Platte (68) ebenfalls ein Fenster (98) zur Sichtbarmachung des Trennzustandes aufweist, das so angeordnet ist, dass in der Trennstellung das Ende der vom Schieber getragenen Klemmen (21) im Fenster erscheint.

11. Vorrichtung nach einem der vorhergehenden Ansprüche, dadurch gekennzeichnet, dass der stationäre Teil (32) einen weiteren Mikrokontakt (100) trägt, welcher mit einer Leuchtanzeige verbunden ist und von einem Steuerelement betätigt wird, dass der Schieber (28) mit einer Nocke (101) versehen ist, welche mit dem Steuerelement in der Trennposition zusammenarbeitet, um in dieser Position das Aufleuchten der Leuchtanzeige bei Betätigung des Mikrokontaktes zu bewirken und so den Trennzustand anzuzeigen.

**Claims**

1. A current tapping device disconnectable from a distribution column with parallel non coplanar omnibus bars, having:
   - a fixed part (32) with means (34) for electric connection to at least one switch apparatus, as well as at least one pre-break microcontact (40) which is actuated by control means, said or each switch apparatus occupying a tripped position in response to the actuation of the or each microcontact;
   - a part movable in translation including a slide (28) which carries clips (21) engageable on the bars and disengageable therefrom, the translational movement of the slide being produced so as to provide current tapping and respectively disconnection;
   - means controlling the disconnection, including a rotary shaft (30) whose rotation controls the translational movement of the slide through a movement transformation member, and a rotary plug (50) driving the shaft which is mounted for translation on the shaft while being urged by a return spring, the plug being actuated by a control member (54);
   characterized in that said means controlling the prebreak include a transmission piece (58) movable in translation while being urged by another return spring and having at least one ramp (64) driving a member actuating the respective microcontact (40), the transmission piece occupying, in the engaged position, a first rest position in which said or each switch apparatus is engaged, and in that said transmission piece (58) also includes a spur (59) in the form of a hook engageable, for the engaged position, in an annular groove (60) formed in the external periphery of the plug (50) at one of its ends so as to allow, in this engaged position, the translational movement both of the plug (50) along the axis of the shaft under the action of a pressure force exerted thereon by the control member (54) and of the transmission piece (58) from its rest position whose ramp or ramps, during this movement, urge the member actuating the respective microcontact so as to cause tripping of the respective switch apparatus, the control of the disconnection by rotation of the shaft taking place at the end of the movement of the plug-transmission piece assembly and by maintaining the pressure force, the spur (59) being in sliding abutment in the groove (60) of the plug during control of the disconnection.

2. The device as claimed in claim 1, characterized in that said transmission piece (58) has a general shape substantially in the form of an L, one of the branches (58b) of which extends in a direction substantially parallel to the axis of the shaft (30) and has, substantially over the whole of its length, a vertical wall (62) in which is formed the or each driving ramp (64) and whose other leg (58a) is arranged in the vicinity of the plug and supports at right angles the hook shaped spur (59) intended to be engaged in the groove of the plug during control of the pre-break and during control of the disconnection.

3. The device as claimed in one of claims 1 and 2, characterized in that flexible retractable means (66) are provided for retaining, solely in the disconnected position, the transmission piece (58) in a second position which it occupies after its translational movement, and in that the groove (60) of the plug is provided with a disengagement ramp (75) oriented outwardly and coming opposite the spur (59) of the transmission piece solely for the disconnection position so as to allow movement, in this position, in the reverse direction of the plug alone along the axis of the shaft under the action of its spring after release of the pressure force.

4. The device as claimed in claim 3, characterized in that said plug (50) is provided with a cam (70) and said flexible retractable means retaining the transmission piece are formed by a blade spring (66) one of the ends (67) of which is provided fixed and the other end (71) of which forms a stop for cooperating with the spur (59) of the transmission piece solely in the disconnection position, the spring (66) cooperating with the cam (70) of the plug during control of the pre-break so as to ensure retraction thereof and being disengaged from the cam during control of the disconnection so that, in the disconnection position, its stop retains the transmission piece (58) in its second position.

5. The device as claimed in one of the preceding claims, characterized in that the fixed part (32) includes a plate (68) which is mounted facing the plug and which extends in a direction perpendicular to the axis of the rotary shaft (30), in that the plate has on its rear face a vertical flap (82) lockable in the engaged position in which it closes an aperture (84) formed in the plate, and in that a notch (86) is provided on the surface of the plug (50) and is situated so as to come opposite the flap solely in the disconnection position, so that, in this position, the flap is able to engage by translation in the notch under the action of a manual control piece (93), this latter moving the flap inside the notch so that at the end of travel said flap comes into abutment against the bottom of the notch for immobilizing the plug (50) and leaves the aperture uncovered for insertion of at least one padlock (90).

6. The device as claimed in claim 5, characterized in that the manual control piece actuating the flap is formed by a pull-tab (93) which is formed integrally with the flap (82) and which extends in a direction perpendicular to the direction of mouvement of the flap while projecting from an opening (94) formed in the plate.

7. The device as claimed in one of claims 5 and 6, characterized in that said rotary plug (50) has at its other end a housing (52) with asymmetric contour, and in that the plate (68) has a projection (77) forming an annular collar coaxial with the plug and comprising two insertion notches (79) disposed respectively along two perpendicular axes, the housing in the plug and one or other of the notches of the collar being able to receive the control member (54) and coinciding only in the engagement position and respectively in the disconnection position.

8. The device as claimed in claim 7, characterized in that said control member (54) is an operating key which is provided with a spur able to be engaged in one or other of the notches (79) of the collar for the respective engagement and disconnection positions, and in that said spur is able to cooperate with a bearing surface (78) provided on the collar so as to prevent removal of the key during disconnection and re-engagement.

9. The device as claimed in one of claims 4 and 5, characterized in that the plate (68) is provided with an access orifice (96) for passing therethrough a tool intended to actuate the blade spring (66) retaining the transmission piece, said tool being inserted solely in the disconnection position so as to allow the blade spring to retract in this position, the transmission piece (58) undergoing a displacement under the action of its return spring so as to occupy its rest position in which the respective switch apparatus is engaged, allowing an off load test of said or each switch apparatus.

10. The device as claimed in one of claims 5 to 9, characterized in that said rotary shaft (30) extends in a direction perpendicular to the direction of movement of the slide (28) and the plate (68) also has a window (98) displaying the disconnection state by being placed so that in the disconnected slide, the ends of the clips (21) carried by the slide appear in the window.

11. The device as claimed in one of the preceding claims, characterized in that the fixed part (32) has an additional microcontact (100) connected to an indicator light and actuated by a control element, and in that the slide (28) is provided with a cam (101) which cooperates with the control element in the disconnected position so as to cause the indicator light to light up in this position in response to the actuation of the microcontact, thus indicating the disconnected state.

# FIG.1

# FIG.6

FIG. 2

EP 0 233 420 B1

# FIG.3

## FIG. 4

## FIG. 5

# FIG.7

68

96  66  70  71  58  64 41 40

52  59  30

54  50  56 60  45

20  28

EP 0 233 420 B1

# FIG.8

P  MC

I  D

A

**FIG.9**

96  66  70 71 59  45  58  64 41

54  50  56 60  40  30

20

28

EP 0 233 420 B1

**FIG.10**

P  MC

I  D

A

FIG.11

FIG.12

EP 0 233 420 B1

FIG.13

FIG. 14

EP 0 233 420 B1

FIG.15

68

82

84

66

86

75 71 59

58

64 41

40

30

50

60

45

20

28

FIG. 16

P

MC

I

D

A

EP 0 233 420 B1

FIG.17

FIG.18

EP 0 233 420 B1

FIG. 19

FIG. 20

EP 0 233 420 B1

FIG.21

FIG.22

EP 0 233 420 B1